Europäisches Patentamt

European Patent Office

Office européen des brevets

(11) Veröffentlichungsnummer : **0 081 221**
**B1**

(12) **EUROPÄISCHE PATENTSCHRIFT**

(45) Veröffentlichungstag der Patentschrift :
**24.04.85**

(21) Anmeldenummer : **82111246.3**

(22) Anmeldetag : **04.12.82**

(51) Int. Cl.⁴ : **A 01 B 59/043**

(54) **Schnellkuppler an einer Dreipunktanbauvorrichtung an landwirtschaftlichen Maschinen.**

(30) Priorität : **07.12.81 DE 3148405**
**07.12.81 DE 8135569 U**

(43) Veröffentlichungstag der Anmeldung :
**15.06.83 Patentblatt 83/24**

(45) Bekanntmachung des Hinweises auf die Patenterteilung : **24.04.85 Patentblatt 85/17**

(84) Benannte Vertragsstaaten :
**AT BE CH DE FR GB IT LI LU NL SE**

(56) Entgegenhaltungen :
**AT-B- 275 942**
**AT-B- 280 800**
**US-A- 2 674 169**

(73) Patentinhaber : **Conrad, Ernst**
**Im Westfeld 13**
**D-3101 Nienhagen (DE)**

(72) Erfinder : **Conrad, Ernst**
**Im Westfeld 13**
**D-3101 Nienhagen (DE)**

(74) Vertreter : **Junius, Walther, Dr.**
**Wolfstrasse 24**
**D-3000 Hannover 81 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft einen Schnellkuppler an einer Dreipunktanbauvorrichtung an landwirtschaftlichen Maschinen, bestehend aus einem Haken am Unterlenker und einem Kuppelglied in Form einer Buchse, die auf einem Zapfen am anzukuppelnden Anbaugerät befestigt ist.

Derartige Schnellkuppler (AT-B-275 942, US-A-267 4169), sind an Dreipunktanbauvorrichtungen beliebt, weil sie das mühsame Ankoppeln der Unterlenker der Dreipunktanbauvorrichtung von Hand vermeiden und ein Ankoppeln vom Schleppersitz aus ermöglichen. Nachteilig an den verschiedenen Bauformen der Schnellkuppler ist jedoch der hohe Verschleiß. Wird der Haken am Unterlenker direkt an den Zapfen am Anbaugerät angekoppelt, so tritt hoher Verschleiß sowohl am Haken als auch am Zapfen auf. Besonders beliebt waren Schnellkuppler mit einem auf den Zapfen am Anbaugerät aufzuschiebenden und durch einen Bolzen zu befestigenden Kuppelglied in Form einer Buchse mit einem kegelstumpfförmigen Fangsteller. Um hier den Verschleiß an dem Kuppelglied herunterzusetzen, wurde die Außenfläche der Buchse kugelförmig gestaltet und gehärtet. Der Haken wurde entsprechend hohlkugelförmig ausgestaltet. Mit diesem Schnellkuppler konnte der Verschleiß des Anbaugerätes vermieden werden, am Haken und am Kuppelglied jedoch nicht. Der Verschleiß am Kuppelglied ist an sich nicht so schwerwiegend, weil das Kuppelglied ein kleines, schnell austauschbares Bauteil ist. Anders ist das jedoch am Haken. Dieser muß mit dem gesamten Unterlenker ausgetauscht werden. Der Unterlenker ist schon wegen seiner Größe erheblich teurer und er ist wesentlich schwieriger auszutauschen.

Es ist die Aufgabe der Erfindung, den Schnellkuppler so zu gestalten, daß weder am Zapfen des Anbaugerätes noch am Haken des Unterlenkers wesentlicher Verschleiß auftritt und daß auch der Verschleiß am Kuppelglied möglichst gering gehalten wird.

Die Erfindung besteht darin, daß die Außenfläche der Buchse des Kuppelgliedes zylindrisch ist, daß die Innenfläche der Buchse des Kuppelgliedes hohlkugelförmig geformt ist und daß dieser hohlkugelförmige Raum einen entsprechend kugelförmig verdickten, am Anbaugerät befestigten Stutzen aufnimmt.

Bei Verwendung dieses Kuppelgliedes ist ein Verschleiß am Zapfen des Anbaugerätes und am Haken weitgehend vermieden. Aber auch am Kuppelglied ist kaum Verschleiß feststellbar. Das liegt daran, daß sich die hohlzylindrische Innenfläche des Rohrstutzens exakt auf den Zapfen des Anbaugerätes aufsetzt und daß die zylindrische Außenfläche der Buchse exakt im Haken des Unterlenkers liegt. Durch eine exakte Anlage werden die Flächenpressungen klein, weil die unter den dynamischen Lasten gepreßten Flächen groß sind. Da die Kugelfläche des Stutzens, der vorzugsweise als Rohrstutzen ausgebildet ist, nahezu vollständig von der Hohlkugelfläche der Buchse umschlossen ist, tritt auch hier kaum Verschleiß auf, weil einerseits kein Schmutz an die aufeinanderliegenden Kugelflächen kommen kann und weil andererseits auch hier die Flächenpressungen niedrig sind.

Dabei ist es zweckmäßig, daß die Buchse an ihrer einen Stirnseite einen kegelstumpfförmigen Fangteller trägt und daß die Buchse auf der dem Fangsteller gegenüberliegenden Seite einen Wulst und/oder einen weiteren Fangteller trägt. Diese Ausführungsform wird dort gewählt, wo der Zapfen, auf dem der Rohrstutzen aufgeschoben ist, einseitig am Anbaugerät befestigt ist.

Ist der Zapfen, auf dem der Rohrstutzen aufgeschoben ist, am Anbaugerät jedoch beidseitig befestigt, ist es zweckmäßig, wenn die Buchse an beiden Stirnseiten einen Wulst trägt.

Dieses Kuppelglied läßt sich sehr einfach herstellen, wenn die hohlkugelförmige Fläche des Innenraumes im Bereich der größten, senkrecht zur Achse der Buchse gemessenen Erstreckung geteilt ist und einerseits durch eine Hohlkugelfläche in der Buchse, andererseits durch eine gleichgeformte Hohlkugelfläche in einem Einsatz gebildet ist, der in eine bis zur Hohlkugelfläche der Buchse reichende Bohrung eingesetzt und befestigt ist.

Sehr wirtschaftlich lassen sich die Teile dieses Kuppelgliedes als Schmiedestücke in Gesenkschmieden herstellen. Hierbei ist es vorteilhaft, wenn der Ring an der der Hohlkugelfläche abgewandten Seite den Wulst oder den Fangteller trägt und wenn die Buchse auf der der Hohlkugelfläche abgewandten Seite einen Wulst oder ebenfalls einen Fangteller trägt.

Es ist von besonderem Vorteil, daß das Hakenmaul eine hohlzylindrische Form aufweist. Denn diese hohlzylindrische Form ist besonders leicht herstellbar und die Flächenpressungen sind bei dieser Form am niedrigsten. Besonders zweckmäßig ist es, wenn das Hakenmaul die Form eines halben Hohlzylinders aufweist, der an den Kanten nach außen abgerundet ist.

Verschleiß trat bei den bekannten Ausführungen aber nicht nur am Hakenmaul und am Kuppelglied auf, sondern auch an einer Arretiervorrichtung, mit der das Hakenmaul zu verschließen war. Bei der erfindungsgemäßen Ausführung des Kuppelgliedes wird dieser Verschleiß herabgesetzt. Dieser Verschleiß wird aber noch weiter herabgesetzt, wenn die Arretiervorrichtung ein verschwenkbarer Klotz ist, dessen Verschwenkwelle in einem Vorsprung am Unterlenker gelagert ist und die die Buchse berührende Fläche in Richtung parallel zur Achse der Buchse gradlinig oder nur sehr schwach konvex gekrümmt ist.

Das Wesen der Erfindung ist nachstehend anhand eines in der Zeichnung schematisch dargestellten Ausführungsbeispieles näher erläutert. Es zeigen:

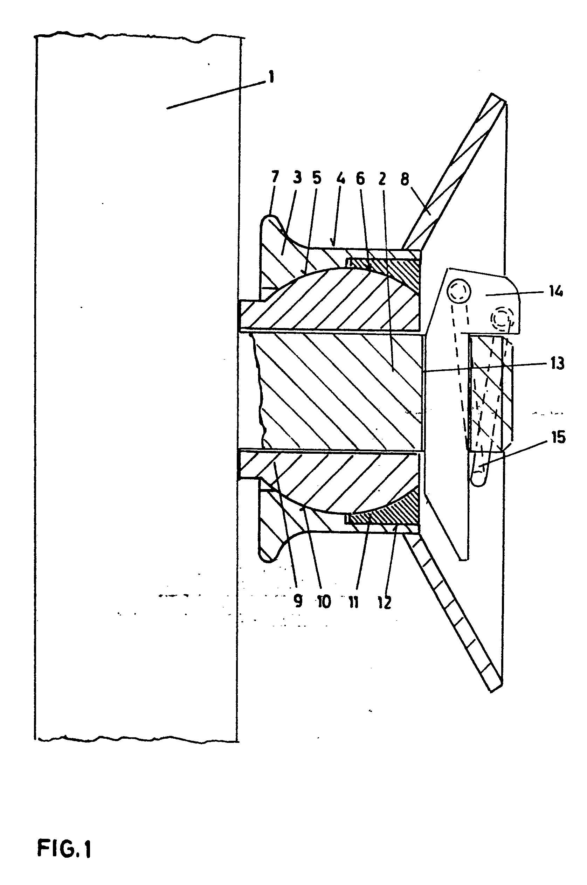

Figur 1  einen Schnitt durch das Kuppelglied

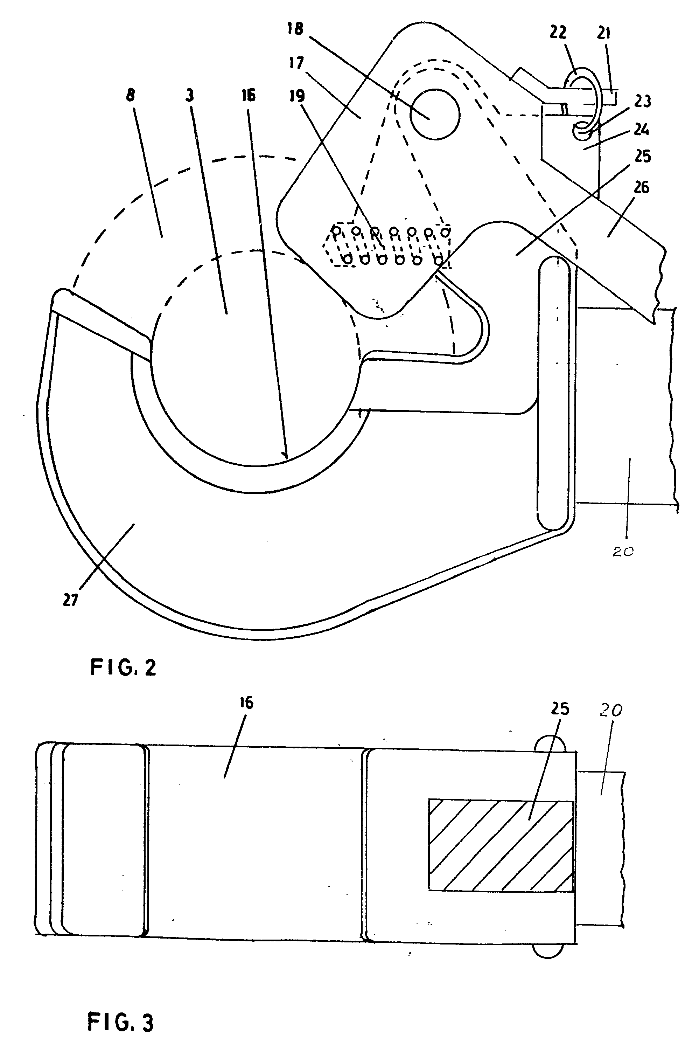

Figur 2  eine Ansicht des Hakens von der Seite,
Figur 3  eine Ansicht auf den Haken von oben,
Figur 4  einen Schnitt durch eine andere Ausführung des Kuppelgliedes.

Am Rahmen 1 des Anbaugerätes ist ein Zapfen 2 angebracht, mit dem das Anbaugerät von dem an einem Unterlenker 20 angebrachten Haken 27 getragen werden soll. Auf diesen Zapfen 2 wird das Kuppelglied aufgesetzt. Das Kuppelglied besteht aus einer Buchse 3 mit zylindrischer Aussenfläche 4 und hohlkugelförmiger Innenfläche 5, 6 ; das Kuppelglied besteht weiter aus einem Fangteller 8, der an der Buchse 3 auf der dem Wulst 7 abgewandten Seite fest angebracht ist, zweckmäßigerweise angeschweißt ist, und besteht weiter aus einem Rohrstutzen 9, der auf seiner Außenseite kugelförmig verdickt ist und hierdurch die Kugelfläche 10 bildet, deren Radius geringfügig größer ist als der Radius der Hohlkugelfläche 5, 6. Während die Kugelfläche 5 unmittelbar in die Buchse 3 eingearbeitet ist, ist die Kugelfläche 6 in einen Ring 11 eingearbeitet, der außen eine zylindrische Umfangsfläche aufweist, die exakt in die Innenfläche 12 einer Axialbohrung bzw. Axialausfräsung in der Buchse 3 hineinpaßt. Auch dieser Ring 11 ist mit der Buchse 3 fest verbunden, er ist mit ihr verschweißt.

Der Zapfen 2 am Rahmen 1 des Anbaugerätes weist ein Loch 13 auf, in das ein Stecker 14 gesetzt ist, der mittels eines federnden Ringes 15 im Zapfen 2 festgesetzt ist. Dieser Stecker 14 dient der Befestigung der Kuppelgliedes.

Der Haken 27 weist ein Maul auf, das von einer hohlzylindrischen Fläche 16 gebildet ist. Diese Fläche 16 weist einen geringfügig größeren Radius als die zylindrische Fläche 4 der Buchse auf. Die Buchse 3 wird in der Fläche 16 des Hakenmaules mittels der Arretiervorrichtung 17 gehalten, die aus einem um die Achse 18 verschwenkbaren Klotz besteht, der durch die Feder 19 und die auf einen an ihm angebrachten Hebel 26 wirkende Schwerkraft gedrückt wird.

Um den einwandfreien Betrieb auch bei starken Erschütterungen zu sichern, ist an dem der Buchse 3 abgewandten Ende des Klotzes 17 der Arretiervorrichtung ein Haken oder ein Stift, zweckmäßig ein etwas gebogener Stift 21 fest angebracht (angeschweißt), über den ein sogenannter Klappsplint 22 zur Sicherung schwenkbar ist. Der Klappsplint 22 ist ein geteilter Federring, dessen Enden in zwei versetzt gegenüberliegend angeordnete Sacklöcher 23 eingesetzt werden, die in einem Vorsprung 24 des Trägers 25 eingebohrt sind. Der Träger 25 trägt den Lagerzapfen 18 für die Lagerung des Klotzes 17. Der Klotz 17 wird mittels des Hebels 26 verschwenkt.

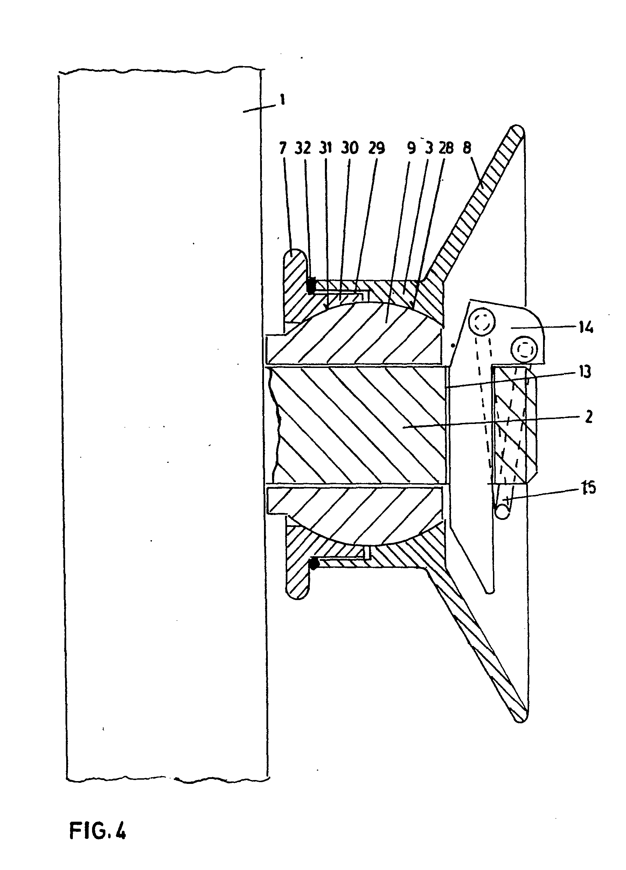

In Fig. 4 ist eine andere Ausführungsform des Kuppelgliedes gezeigt : Fangteller 8 und Buchse 3 sind hier einstückig als ein einziges Schmiedeteil hergestellt, wobei die Hohlkugelfläche 28 auf der dem Fangteller 8 benachbarten Seite in diesem Schmiedeteil angeordnet ist. Auf der dem Fangteller abgekehrten Seite dieses Schmiedeteiles ist innen eine hohlzylindrische Fläche 29 ausgebildet, in die der Ring 30 eingesetzt ist, der auf seiner einen Seite einen nach aussen gerichteten Wulst 7 aufweist, während die Innenwandung dieses Ringes 30 auf der dem Wulst 7 abgewandten Seite mit einer gekrümmten Fläche 31 versehen ist, die in ihrer Form einem Hohlkugelabschnitt entspricht. Diese beiden Schmiedeteile sind miteinander durch die Schweißnaht 32 verbunden, welche die dem Fangteller 8 abgewandte Stirnseite der Buchse 3 mit der im wesentlichen zylindrischen oder leicht konischen Aussenfläche des Ringes 30 verbindet. Im gezeichneten Ausführungsbeispiel verbindet diese Schweißnaht darüber hinaus auch die beiden genannten Flächen mit der der Stirnseite abgewandten Fläche des Wulstes 7.

Bei Ausführungen, bei denen der Zapfen 2 am Arbeitsgerät beidseitig eingespannt ist, wird anstelle des Fangtellers 8 ein weiterer Wulst 7 am Kuppelglied vorgesehen.

## Patentansprüche

1. Schnellkuppler an einer Dreipunktanbauvorrichtung an landwirtschaftlichen Maschinen, bestehend aus einem Haken (27) am Unterlenker (20) und einem Kuppelglied in Form einer Buchse (3), die am anzukoppelnden Anbaugerät (1) gelagert ist, dadurch gekennzeichnet, daß die Außenfläche (4) der Buchse (3) des Kuppelgliedes zylindrisch ist, daß die Innenfläche (5, 6) der Buchse (3) des Kuppelgliedes hohlkugelförmig geformt ist, und daß dieser hohlkugelförmige Raum einen entsprechend kugelförmig verdickten, am Anbaugerät (1) befestigten Stutzen (9) aufnimmt.

2. Schnellkuppler nach Anspruch 1, dadurch gekennzeichnet, daß die Buchse (3) an ihrer einen Stirnseite einen kegelstumpfförmigen Fangteller (8) trägt und daß die Buchse (3) auf der dem Fangteller (8) gegenüberliegenden Seite einen Wulst (7) und/oder einen weiteren Fangteller trägt.

3. Schnellkuppler nach Anspruch 1, dadurch gekennzeichnet, daß die Buchse (3) an beiden Stirnseiten einen Wulst (7) trägt.

4. Schnellkuppler nach Anspruch 1, dadurch gekennzeichnet, daß die hohlkugelförmige Fläche (5, 6) des Innenraumes der Buchse (3) im Bereich der größten, senkrecht zur Achse der Buchse (3) gemessenen Erstreckung geteilt ist und einerseits durch eine Hohlkugelfläche (5) in der Buchse (3), andererseits durch eine gleichgeformte Hohlkugelfläche (6) in einem Ring (11) gebildet ist, der als Einsatz in eine bis zur Hohlkugelfläche (5) der Buchse (3) reichende Bohrung (12) eingesetzt und befestigt ist.

5. Schnellkuppler nach Anspruch 4, dadurch gekennzeichnet, daß der Ring (11, 30) an der der Hohlkugelfläche abgewandten Seite den Wulst (7) oder einen Fangteller trägt.

6. Schnellkuppler nach Anspruch 4, dadurch gekennzeichnet, daß die Buchse (3) als Schmiedestück hergestellt ist und auf der die Hohlkugelfläche tragenden Seite einen Wulst oder einen Fangteller aufweist.

7. Schnellkuppler nach Anspruch 1, dadurch gekennzeichnet, daß das Maul des Hakens (2) eine hohlzylindrische Form (16) aufweist.

8. Schnellkuppler nach Anspruch 7, dadurch gekennzeichnet, daß das Maul des Hakens (2) die Form eines halben Hohlzylinders aufweist, der an den Kanten nach Außen abgerundet ist.

9. Schnellkuppler nach Anspruch 1, dadurch gekennzeichnet, daß die Arretiervorrichtung (17) ein verschwenkbarer Klotz ist, dessen Verschwenkwelle (18) in einem Vorsprung (24) am Unterlenker (20) gelagert ist, und daß die die Buchse (3) berührende Fläche in Richtung parallel zur Achse der Buchse (3) gradlinig oder nur sehr schwach konvex gekrümmt ist.

10. Schnellkuppler nach Anspruch 1, dadurch gekennzeichnet, daß der Klotz (17) der Arretiervorrichtung für die Buchse (3) durch einen über einen Haken oder Stift (21) geschwenkten Klappsplint (22) gesichert ist.

## Claims

1. A rapid action coupling at a three-point hitch in agricultural machines, consisting of a hook (27) on the lower guide rod (20) and a coupling element in the form of a bush (3) which is mounted on the hitch (1) which is to be coupled, characterised in that the outer surface (4) of the bush (3) of the coupling element is cylindrical that the inner surface (5, 6) of the bush (3) of the coupling element is of hollow spherical form, and that this hollow spherical area accomodates a connecting piece (9) which bulges in corresponding spherical form and which is connected to the hitch (1).

2. A rapid action coupling as claimed in Claim 1, characterised in that at its one end, the bush (3) carries a frustum-shaped catching dish (8), and that on the end opposite the catching dish (8) the bush (3) carries a beading (7) and/or a further catching dish.

3. A rapid action coupling as claimed in Claim 1, characterised in that the bush (3) carries a beading (7) at both its end sides.

4. A rapid action coupling as claimed in Claim 1, characterised in that the hollow spherical surface (5, 6) of the interior of the bush (3) is divided in the region of its longest dimension measured at right angles to the axis of the bush (3), and is formed, on the one hand, by a hollow spherical surface (5) in the bush (3) and, on the other hand, by a hollow spherical surface (6) of identical formation in a ring (11), which is inserted and secured as an insert in a bore (12) which extends to the hollow spherical surface (5) of the bush (3).

5. A rapid action coupling as claimed in Claim 4, characterised in that on the end facing away from the hollow spherical surface, the ring (11, 30) carries the beading (7) or a catching dish.

6. A rapid action coupling as claimed in Claim 4, characterised in that the bush (3) is produced as a forging and at the end which carries the hollow spherical surface is provided with a beading or a catching dish.

7. A rapid action coupling as claimed in Claim 1, characterised in that the mouth of the hook (2) is of hollow cylindrical formation (16).

8. A rapid action coupling as claimed in Claim 7, characterised in that the mouth of the hook (2) has the form of half of a hollow cylinder which is externally rounded at the edges.

9. A rapid action coupling as claimed in Claim 1, characterised in that the locking device (17) is a pivotable block, the pivot rod (18) of which is mounted in a projection (24) from the lower guide rod (30), and that in the direction parallel to the axis of the bush (3), the surface which contacts the bush (3) is rectilinear or very slightly curved in convex form.

10. A rapid action coupling as claimed in Claim 1, characterised in that the block (17) of the locking device for the bush (3) is secured by a hinged split pin (22) which is turned via a hook or pin (21).

## Revendications

1. Dispositif d'accouplement rapide pour un sous-ensemble à trois points de machine agricole, comportant un crochet (27) prévu à l'extrémité d'un timon (20) et un organe d'accouplement en forme de manchon (3) monté sur le sous-ensemble à accoupler (1), caractérisé par le fait que la surface extérieure (4) du manchon d'accouplement (3) est cylindrique, tandis que la surface intérieure (5, 6) dudit manchon définit un logement sphérique destiné à recevoir une pièce d'appui homologue (9) montée sur ledit sous-ensemble.

2. Dispositif d'accouplement rapide selon la revendication 1, caractérisé par le fait que le manchon (3) présente latéralement, d'un côté un élément de prise tronconique (8), et de l'autre un bourrelet (7) et/ou un élément de prise analogue.

3. Dispositif d'accouplement rapide selon la revendication 1, caractérisé par le fait que le manchon (3) présente latéralement, des deux côtés, un bourrelet (7).

4. Dispositif d'accouplement rapide selon la revendication 1, caractérisé par le fait que la surface intérieure sphérique (5, 6) du manchon (3) est formée de deux parties se rejoignant dans la zone la plus éloignée de l'axe du manchon, la première partie étant une surface intérieure du manchon lui-même, tandis que l'autre partie est la surface intérieure d'un anneau (11) rapporté et fixé dans un alésage (12) ménagé à cet effet dans le manchon jusqu'à une zone adjacente à ladite première partie.

5. Dispositif d'accouplement rapide selon la revendication 4, caractérisé par le fait que l'anneau (11, 30) est solidaire d'un bourrelet latéral ou d'un élément de prise.

6. Dispositif d'accouplement rapide selon la revendication 4, caractérisé par le fait que le manchon (3) est une pièce forgée, et qui présente latéralement un bourrelet ou un élément de prise.

7. Dispositif d'accouplement rapide selon la revendication 1, caractérisé par le fait que la surface utile (16) du crochet (2) est de forme cylindrique.

8. Dispositif d'accouplement rapide selon la revendication 7, caractérisé par le fait que la surface utile du crochet (2) est demi-cylindrique, et présente des arêtes latérales arrondies.

9. Dispositif d'accouplement rapide selon la revendication 1, caractérisé en ce qu'il comporte un loquet de verrouillage (17) dont l'axe de basculement (18) est monté sur une portion saillante (24) du timon (20), et dont la face destinée à venir en contact avec la surface extérieure du manchon est plane ou très légèrement convexe, selon une direction parallèle à l'axe du manchon (3).

10. Dispositif d'accouplement rapide selon la revendication 1, caractérisé par le fait qu'il comporte un loquet de verrouillage (17) pouvant être bloqué par une goupille basculante (22) passant autour d'une patte ou crochet (21) dudit loquet.

FIG.1

1

FIG. 2

FIG. 3

FIG. 4